# EUROPÄISCHE PATENTSCHRIFT

(11) **EP 1 961 589 B1**
(45) Veröffentlichungstag und Bekanntmachung des Hinweises auf die Patenterteilung: **11.09.2013**
(21) Anmeldenummer: 07033573.2
(22) Anmeldetag: 01.12.2007
(51) Int. Cl.: B60C 23/04, B60R 11/00, B60R 11/02, B60S 1/50

(54) **Halterung für eine Transpondereinheit**
Holder for a transponder unit
Support d'une unité de transpondeur

(30) Priorität: 24.02.2007 DE 102007009155
(43) Veröffentlichungstag der Anmeldung: 27.08.2008
(73) Patentinhaber: Dr. Ing. h.c. F. Porsche AG, 70435 Stuttgart (DE)
(72) Erfinder: Baum, Michael, 75233 Tiefenbronn-Lehningen (DE); Deuschle, Achim, 72649 Wolfschlugen (DE)

(56) Entgegenhaltungen:
- DE-A1- 10 351 959
- DE-A1- 19 921 182
- US-A1- 2003 080 271

## Beschreibung

Die vorliegende Erfindung betrifft eine Halterung für ein als Transpondereinheit ausgebildetes Bauteil an einem Kraftfahrzeug.

An modernen Kraftfahrzeugen sind heutzutage eine Vielzahl von Bauteilen zu haltern, also zu befestigen. Hierbei kann es sich um elektrische und/oder elektronische Bauteile handeln, wie z.B. Steuergeräte, Überwachungseinrichtungen und/oder Sensoren. Bekannt sind insbesondere auch Reifendruck-Kontrolleinrichtungen, die im jeweiligen Fahrzeugreifen einen Drucksensor aufweisen, der drahtlos mit einer Transpondereinheit bzw. Antenne kommuniziert, welche in der Nähe des jeweiligen Drucksensors am Fahrzeug anzubringen ist. Die Transpondereinheit bzw. Antenne ist dabei ihrerseits mit einem entsprechenden Steuergerät der Reifendruck-Kontrolleinrichtung verbunden, um die Drucksensoren zu stimulieren bzw. die Signale der Drucksensoren auszuwerten. Neben einem Reifeninnendruck kann dabei vom Sensor auch eine Temperatur des Reifens an die Transpondereinheit bzw. Antenneneinheit übertragen werden. Zur Anbringung der Sensoren sind vor allem zwei Systeme, nämlich eine Befestigung an einer Felge mittels eines Stahl- oder Plastikbandes sowie eine Befestigung innen am Ventil bekannt. Für Reparatur- und Wartungszwecke kann es vorteilhaft sein, derartige Bauteile so am Fahrzeug zu befestigen, dass sie gegebenenfalls einfach demontierbar sind.

Mit dem Ziel, eine elektronische Steuereinheit in einem Fahrzeug vor einer übermäßigen Wärmeentwicklung zu schützen, schlägt die DE 103 51 959 A1 vor, die Steuereinheit an oder in einem Flüssigkeitsbehälter für eine Scheibenwaschanlage des Fahrzeuges anzuordnen, so dass die Steuereinheit hierdurch gekühlt bzw. abgeschirmt wird.

Weiterhin wird in der DE 199 21 182 A1 beschrieben, Reinigungsflüssigkeit für eine Scheibenwascheinrichtung als Kühlmedium für einen Behälter für elektrische Komponenten eines Fahrzeugs zu verwenden, wobei der Behälter einen ihn zumindest teilweise umhüllenden Mantel aufweist, der das Kühlmedium enthält.

Die vorliegende Erfindung beschäftigt sich mit dem Problem, für eine Halterung der eingangs genannten Art eine verbesserte Ausführungsform anzugeben, die sich insbesondere durch eine vereinfachte Montage und Demontage des jeweiligen Bauteils auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Halterung für eine Transpondereinheit einer Reifendruck-Kontrolleinrichtung an einem Kraftfahrzeug als integralen Bestandteil eines weiteren Bauteils auszubilden, erfindungsgemäß eines Trägers für einen Wischwasserbehälter. Die Halterung kann dadurch einfach und kostengünstig zusammen mit dem weiteren Bauteil hergestellt werden, so dass ein separater Herstellungs- bzw. Fertigungsprozess für die Halterung entfallen kann. Dabei ist die Halterung erfindungsgemäß integraler Bestandteil eines Wischwasserbehälterfußes und dadurch wird eine direkt benachbart zum jeweiligen Reifen gelegene Anordnung der Transpondereinheit der Reifendruck-Kontrolleinrichtung ermöglicht.

Vorzugsweise ist dabei das weitere Bauteil aus Kunststoff ausgebildet, so dass durch ein einfaches Ändern einer Spritzgussform für dieses Bauteil die Halterung anspritzbar ist. Die Halterung kann dabei beispielsweise in Form eines im Wesentlichen ebenen Haltebereiches oder in Form von Halteflanschen ausgebildet sein, über welche das Bauteil, also die Transpondereinheit der Reifendruck-Kontrolleinrichtung, an der Halterung, d.h. an einem Träger des Wischwasserbehälters, befestigt werden kann. Durch die Ausbildung der Halterung als integraler Bestandteil des weiteren Bauteils ist eine separate Montage der Halterung an diesem Bauteil entbehrlich, wodurch auch ein Montageaufwand reduziert werden kann.

Zweckmäßig ist die Transpondereinheit mit der Halterung verschraubt und verklemmt, wobei ein hohler, spreizbarer Fixierkörper vorgesehen ist, der im Einbauzustand in eine Durchgangsöffnung an der Halterung hineinragt, welche koaxial zu einer Aufnahmeöffnung an einem Anbindungsflansch der Transpondereinheit ausgebildet ist und wobei der spreizbare Fixierkörper mittels eines koaxial darin eingebrachten Spreizkörpers beim Befestigen der Transpondereinheit an der Halterung gespreizt wird und dadurch die Transpondereinheit mit der Halterung zusätzlich verklemmt. Der spreizbare Fixierkörper kann dabei ebenfalls als kostengünstiges Spritzgussteil aus Kunststoff hergestellt werden und zusätzlich zur Klemmwirkung der Schraube eine Spreizwirkung des Fixierkörpers auf die entsprechende Durchgangsöffnung an der Halterung ausüben, wodurch eine besonders zuverlässige und durch Vibrationen, wie sie im üblichen Fahrbetrieb vorkommen können, nicht lösbare Befestigung der Transpondereinheit an der Halterung gewährleistet werden kann.

Zweckmäßig ist die Transpondereinheit mit der Halterung verclipst. Eine Verclipsung kann dabei über bekannte Rast- bzw. Gegenrastelemente erfolgen, wobei die Rastelemente beispielsweise an der Transpondereinheit und die zugehörigen Gegenrastelemente an der Halterung vorgesehen sind. Eine derartige Verclipsung erleichtert eine Montage der Transpondereinheit an der Halterung und kann sowohl zusätzlich als auch alternativ zur Verschraubung der Transpondereinheit an der Halterung zur Anwendung kommen. Derartige Clipsverbindungen ermöglichen ebenso wie eine Verschraubung eine zuverlässige Fixierung der Transpondereinheit an der Halterung, welche durch die im Fahrbetrieb des Kraftfahrzeugs üblicherweise auftretenden Vibrationen nicht gelöst werden kann. Durch Entrasten der Rastelemente von den Gegenrastelementen kann die Transpondereinheit bei einer Demontage leicht von der Halterung entfernt werden, so dass sich hierdurch auch Wartungskosten senken lassen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Anordnung einer Transpondereinheit an einer erfindungsgemäßen Halterung,
- Fig. 2: eine Detailansicht einer möglichen Ausführungsform einer Transpondereinheit,
- Fig. 3: eine Schrägansicht von unten auf die erfindungsgemäße Halterung.

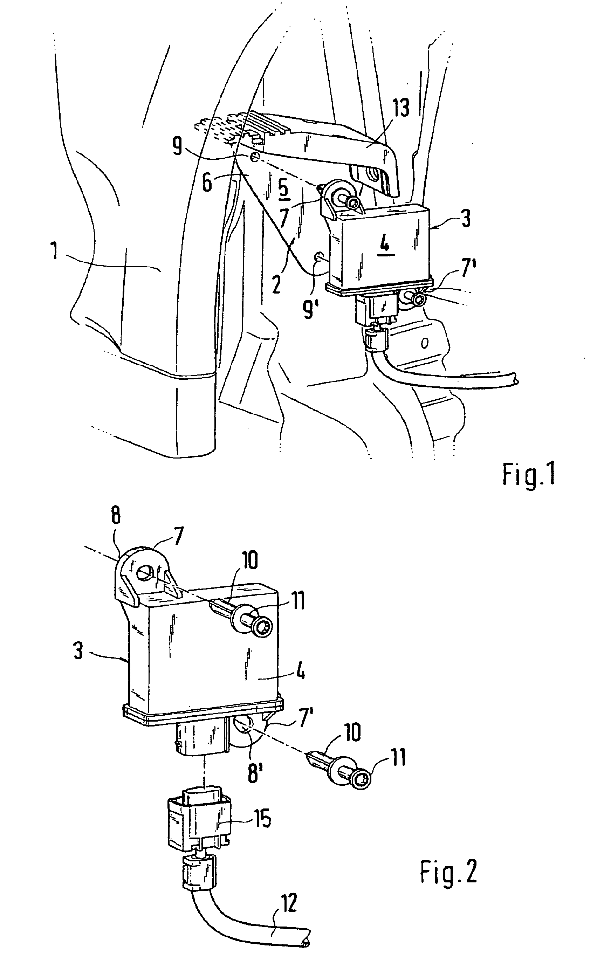

Entsprechend Fig. 1 ist im Bereich eines Radkastens 1 eines im übrigen nicht dargestellten Kraftfahrzeuges eine Halterung 2 für ein Bauteil 3, nämlich eine Transpondereinheit 4 einer im übrigen nicht dargestellten Reifendruck-Kontrolleinrichtung, am Kraftfahrzeug vorgesehen. Die Halterung 2 ist dabei erfindungsgemäß als integraler Bestandteil eines Trägers 5 für einen Wischwasserbehälter 13 ausgebildet.

Im in Fig. 1 dargestellten Beispiel ist die Halterung 2 als integraler Bestandteil eines Wischwasserbehälterfußes 6 ausgebildet, wobei an diesem ein im wesentlichen ebener Anbindungsflansch 7 angeformt, insbesondere angespritzt ist. Erfindungswesentlich ist dabei, dass die Halterung 2 zusammen mit dem Träger 5 bzw. dem Wischwasserbehälterfuß 6 hergestellt wird, sodass eine nachträgliche Montage der Halterung 2 am Träger 5 entfallen kann. Die in den Fig. 1 und 2 dargestellte Transpondereinheit 4 weist dabei zumindest einen Anbindungsflansch 7, hier zwei Anbindungsflansche 7 und 7' für die Befestigung der Transpondereinheit 4 an der Halterung 2 auf.

In den beiden Anbindungsflanschen 7 und 7' ist jeweils eine Aufnahmeöffnung 8 und 8' vorgesehen, welche bei mit der Halterung 2 verbundener Transpondereinheit 4 mit in der Halterung 2 angeordneten und zugehörigen Durchgangsöffnungen 9 und 9' fluchten. Zur Montage der Transpondereinheit 4 an der Halterung 2 werden die bauteilseitigen Aufnahmeöffnungen 8 und 8' mit den halterungsseitigen Durchgangsöffnungen 9 und 9' zur Deckung gebracht und anschließend wird die Transpondereinheit 4 mit der Halterung 2 verschraubt und verklemmt. Hierzu ist ein hohler, spreizbarer Fixierkörper 10 vorgesehen, der im Einbauzustand in die Durchgangsöffnung 9 an der Halterung 2 hineinragt und mittels eines koaxial darin eingebrachten Spreizkörpers 11 gespreizt ist. Der Fixierkörper 10 ist dabei in die Durchgangsöffnung 9 bzw. die Aufnahmeöffnung 8 einsteckbar, wobei ein entsprechender Spreizkörper 11, beispielsweise eine Schraube, in den Fixierkörper 10 koaxial eingebracht, insbesondere eingeschraubt wird, so dass sich der Fixierkörper 10 vorzugsweise radial aufspreizt und dadurch die Transpondereinheit 4 am Fahrzeug festlegt.

Beim Bauteil 3 handelt es sich um eine Transpondereinheit 4 einer Reifendruck-Kontrolleinrichtung, die einerseits drahtlos mit zumindest einem Drucksensor kommunizieren kann, der im jeweiligen zugehörigen Reifen angeordnet ist. Andererseits ist die Transpondereinheit 4 beispielsweise über ein entsprechendes Verbindungskabel 12 (vgl. Fig. 4) mit einem entsprechenden und nicht gezeigten Steuergerät der Reifendruck-Kontrolleinrichtung verbunden und kann diesem Messsignale des Drucksensors übermitteln. Die Transpondereinheit 4 umfasst hierzu eine Sende- und/oder Empfangseinheit sowie eine Antenne, wobei die einzelnen elektrischen bzw. elektronischen Komponenten in einem entsprechenden Gehäuse des Bauteils 3 untergebracht sind. Darüber hinaus ist die Transpondereinheit 4 über das Verbindungskabel 12 oder ein weiteres nicht gezeigtes Kabel in ein elektrisches Bordnetz des Fahrzeuges eingebunden und wird über dieses mit elektrischer Energie versorgt.

Neben einer reinen Verschraubung kann die Transpondereinheit 4 mit der Halterung 2 auch verclipst sein, wobei hierfür spezielle Rast- bzw. Gegenrastelemente am Bauteil 3 bzw. an der Halterung 2 vorgesehen sind, so dass eine besonders schnelle und einfache Montage der Transpondereinheit 4 an der Halterung 2 erreicht werden kann. Die Clipsverbindung kann dabei entweder zusätzlich zu oben genannter Verschraubung oder alternativ zu dieser eingesetzt werden. Da die Anordnung der empfindlichen Transpondereinheit 4 im Radkasten 1 nicht unkritisch hinsichtlich der dort auftretenden Belastungen erscheint, kann zusätzlich eine am Fahrzeug montierte oder montierbare Abdeckung vorgesehen werden, welche die Halterung 2 oder zumindest einen Haltebereich derselben mit der Transpondereinheit 4 nach außen abdeckt und dadurch die Transpondereinheit 4 schützt. Die Abdeckung ist dabei vorzugsweise zwischen der Transpondereinheit 4 und einem Rad des Kraftfahrzeuges angeordnet.

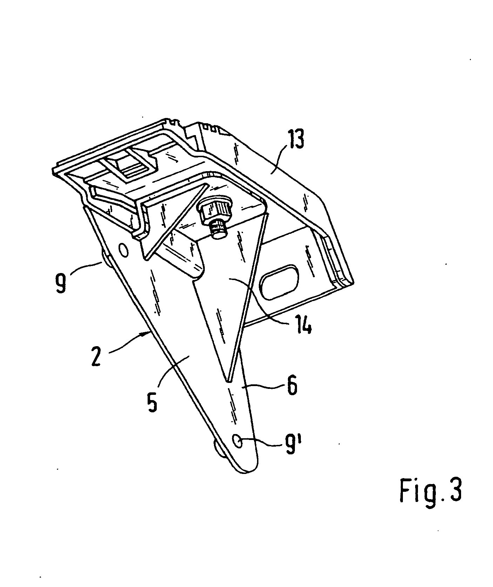

Gemäß Fig. 3 ist erkennbar, dass an der Halterung 2, welche hier als Wischwasserbehälterfuß 6 ausgebildet ist, eine Konsole 14 angeordnet ist, über welche der Wischwasserbehälter 13 mit der Halterung 2 verschraubt ist.

Um auch eine schnelle Demontage des Verbindungskabels 12 von der Transpondereinheit 4 gewährleisten zu können, ist das Verbindungskabel 12 mittels einer entsprechenden Clipsverbindung 15 an der Transpondereinheit 4 festlegbar und mit wenigen Handgriffen auch von der Transpondereinheit 4 wieder lösbar.

## Patentansprüche

1. Halterung (2) für eine Transpondereinheit (4) einer Reifendruck-Kontrolleinrichtung, an einem Kraftfahrzeug, wobei die Halterung (2) als integraler Bestandteil eines Wischwasserbehälterfußes (6) ausgebildet ist, wobei die Transpondereinheit (4) zumindest einen Anbindungsflansch (7,7') für die Befestigung der Transpondereinheit (4) an der Halterung (2) aufweist, wobei an dem wenigstens einen Anbindungsflansch (7,7') eine Aufnahmeöffnung (8,8') vorgesehen ist, welche bei mit der Halterung (2) verbundener Transpondereinheit (4) mit einer in der Halterung (2) angeordneten Durchgangsöffnung (9,9') fluchtet.

2. Halterung nach Anspruch 1, **dadurch gekennzeichnet, dass** die Transpondereinheit (4) mit der Halterung (2) verschraubt und verklemmt ist, wobei ein hohler, spreizbarer Fixierkörper (10,10') vorgesehen ist, der im Einbauzustand in die Durchgangsöffnung (9,9') an der Halterung (2) hineinragt und mittels eines koaxial darin eingebrachten Spreizkörpers (11,11') gespreizt ist.

3. Halterung nach Anspruch 1 oder 2, **dadurch gekennzeichnet, dass** die Transpondereinheit (4) mit der Halterung (2) verclipst ist.

4. Halterung nach einem der Ansprüche 1 bis 3, **dadurch gekennzeichnet, dass** die Halterung (2) als Kunststoffspritzteil ausgebildet ist.

5. Halterung nach einem der Ansprüche 1 bis 4, **dadurch gekennzeichnet, dass** eine am Fahrzeug montierte oder montierbare Abdeckung vorgesehen ist, die die Halterung (2) oder zumindest einen Haltebereich mit der Transpondereinheit (4) nach außen abdeckt.

6. Halterung nach einem der Ansprüche 1 bis 5, **dadurch gekennzeichnet, dass** die Transpondereinheit (4) einerseits mit einem im jeweiligen Reifen angeordneten Drucksensor drahtlos kommuniziert und andererseits mit einem entsprechenden Steuergerät verbunden ist.

## Claims

1. Holder (2) for a transponder unit (4) of a tyre pressure checking device, on a motor vehicle, wherein the holder (2) is designed as an integral part of a wiping water container base (6), wherein the transponder unit (4) has at least one attachment flange (7, 7') for fastening the transponder unit (4) to the holder (2), wherein the at least one attachment flange (7, 7') is provided with a receiving opening (8, 8') which, when the transponder unit (4) is connected to the holder (2), is aligned with a passage opening (9, 9') arranged in the holder (2).

2. Holder according to Claim 1, **characterized in that** the transponder unit (4) is screwed and clamped to the holder (2), wherein a hollow, expandable fixing body (10, 10') is provided, the fixing body, in the installed state, projecting into the passage opening (9, 9') on the holder (2) and being expanded by means of an expanding body (11, 11') provided coaxially therein.

3. Holder according to Claim 1 or 2, **characterized in that** the transponder unit (4) is clipped to the holder (2).

4. Holder according to one of Claims 1 to 3, **characterized in that** the holder (2) is designed as a plastics moulded part.

5. Holder according to one of Claims 1 to 4, **characterized in that** a covering is provided, the covering being fitted or being fittable to the vehicle and outwardly covering the holder (2) or at least a holding region with the transponder unit (4).

6. Holder according to one of Claims 1 to 5, **characterized in that** the transponder unit (4) firstly communicates wirelessly with a pressure sensor arranged in the respective tyre and secondly is connected to a corresponding control unit.

## Revendications

1. Support (2) pour une unité de transpondeur (4) d'un dispositif de contrôle de pression de pneumatique réalisée au niveau d'un véhicule automobile, le support (2) prenant la forme d'un composant faisant intégralement partie d'un pied de réservoir d'eau d'essuyage (6), l'unité de transpondeur (4) comportant au moins une bride de jonction (7, 7') pour la fixation de l'unité de transpondeur (4) au niveau du support (2), une ouverture de réception (8, 8') étant prévue au niveau de l'au moins une bride de jonction (7, 7'), ladite ouverture étant alignée avec une ouverture traversante (9, 9') disposée dans le support (2) en cas d'unité de transpondeur (4) reliée au support (2).

2. Support selon la revendication 1, **caractérisé en ce que** l'unité de transpondeur (4) est vissée et coincée avec le support (2), un corps de fixation (10, 10') déployable creux étant prévu, ledit corps saillant, à l'état encastré, dans l'ouverture traversante (9, 9') au niveau du support (2) et étant déployé à l'aide d'un corps de déploiement (11, 11') amené en son sein dans le plan coaxial.

3. Support selon la revendication 1 ou 2, **caractérisé en ce que** l'unité de transpondeur (4) est clipsée au support (2).

4. Support selon l'une quelconque des revendications 1 à 3, **caractérisé en ce que** le support (2) prend la forme d'une pièce moulée par injection de matière plastique.

5. Support selon l'une quelconque des revendications 1 à 4, **caractérisé en ce qu'**un cache monté ou pouvant être monté au niveau du véhicule est prévu, ledit cache recouvrant vers l'extérieur le support (2) ou au moins une zone de maintien à l'aide de l'unité de transpondeur (4).

6. Support selon l'une quelconque des revendications 1 à 5, **caractérisé en ce que** l'unité de transpondeur (4) communique d'une part sans fil avec un capteur de pression disposé dans le pneumatique respectif et est relié d'autre part à un appareil de commande.
